# EUROPEAN PATENT APPLICATION

(11) **EP 4 738 569 A1**
(43) Date of publication of application: **06.05.2026**
(21) Application number: 24908358.5
(22) Date of filing: 18.12.2024
(51) Int. Cl.: H01M 50/24, H01M 50/271, H01M 50/282, H01M 50/249

(54) **BATTERY PACK AND VEHICLE INCLUDING SAME**

(30) Priority: 22.12.2023 KR 20230190479; 11.12.2024 KR 20240184030
(71) Applicant: LG Energy Solution, Ltd., Seoul 07335 (KR)
(72) Inventor: AHN, Moon-Youl, Daejeon 34122 (KR)
(74) Representative: Hoffmann Eitle
(86) International application number: PCT/KR2024/097134
(87) International publication number: WO 2025/136054

(57) **Abstract**

The present disclosure relates to a battery pack including: a plurality of battery cells; a pack housing having an opening on at least one side and configured to store the plurality of battery cells; and a pack cover configured to cover the opening of the pack housing and having an expansion member configured to expand when a temperature reaches a reference value or more in an inner space thereof.

## Description

### TECHNICAL FIELD

The present disclosure relates to a battery pack and, more specifically, to a battery pack with enhanced safety and a vehicle including the same.

This application is based on and claims priority from Korean Patent Application No. 10-2023-0190479, filed on December 22, 2023, with the Korean Intellectual Property Office, the disclosure of which is incorporated herein in its entirety by reference.

This application is based on and claims priority from Korean Patent Application No. 10-2024-0184030, filed on December 11, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity.

A common method for configuring a battery pack by connecting a plurality of battery cells in series/parallel is to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

In the case of conventional battery packs, if heat continues to accumulate inside the battery module or battery pack due to abnormalities or misuse of battery cells, the heat may rapidly propagate between the battery cells. As a result, the battery cells may simultaneously ignite, making it difficult to suppress the thermal event, and furthermore, the battery module or battery pack may explode, causing even greater damage.

In particular, in the case of conventional battery packs, when thermal runaway occurs internally, the top of the battery pack is heated to act as an ignition source (heat source), and the three elements of fuel, oxygen, and heat source are satisfied when the combustible gas discharged to the outside reacts with oxygen, which results in a problem in which the top of the battery pack ignites.

Therefore, there is a need to develop a structure capable of preventing the top of the battery pack from being heated and capable of removing the heat source, thereby effectively preventing fire from occurring in a battery pack or a device including it.

### DISCLOSURE

### Technical Problem

The present disclosure is designed to solve the problems of the related art, and therefore the present disclosure is directed to providing a battery pack with an improved structure capable of effectively and quickly preventing ignition in the battery pack or a device including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack housing having an opening on at least one side and configured to store the plurality of battery cells; and a pack cover configured to cover the opening of the pack housing and having an expansion member configured to expand when a temperature reaches a reference value or more in an inner space thereof.

The pack housing may have an upper opening, and the pack cover may be configured to cover the opening of the pack housing.

The pack cover may include a first cover provided on an outer side of the plurality of battery cells and a second cover provided on an outer side of the first cover, and the expansion member may be provided between the first cover and the second cover.

The pack cover may be configured such that a gap between the first cover and the second cover increases as the expansion member expands.

The expansion member may be configured to be in contact with both the first cover and the second cover.

The expansion member may be configured in a sheet shape.

A plurality of expansion members may be provided so as to be spaced apart from each other.

The expansion members may be configured to extend in one direction.

The expansion members may be configured to have an expansion rate that differs depending on their positions.

At least some of the plurality of expansion members may be configured such that the expansion rate increases from an end of the pack cover to a central portion.

In another aspect of the present disclosure, there is provided a vehicle including a battery pack according to the present disclosure.

### Advantageous Effects

According to one aspect of the present disclosure, it is possible to ensure the safety and reliability of the battery pack by suppressing ignition at the top of the battery pack in the event of an abnormal condition of the battery cell.

In addition, according to another aspect of the present disclosure, it is possible to prevent or delay events due to thermal runaway, such as a fire or explosion, in a device equipped with the battery pack.

In addition, according to another aspect of the present disclosure, it is possible to secure the structural rigidity of the battery pack as the pack cover is provided with a double structure.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a cross-sectional view of a battery pack taken along line I - I' in FIG. 1 according to an embodiment of the present disclosure.
FIG. 4 is a cross-sectional view illustrating an expanded expansion member included in a battery pack according to an embodiment of the present disclosure.
FIG. 5 is an exploded perspective view of a pack cover included in a battery pack according to an embodiment of the present disclosure.
FIG. 6 is a cross-sectional view of a pack cover included in a battery pack according to an embodiment of the present disclosure.
FIG. 7 is a cross-sectional view of a pack cover included in a battery pack according to another embodiment of the present disclosure.
FIG. 8 is a top view of a battery pack according to an embodiment of the present disclosure.
FIG. 9 is a drawing illustrating a shape of a pack cover when the expansion member expands in a battery pack according to an embodiment of the present disclosure.
FIG. 10 is a drawing illustrating a shape of a pack cover when the expansion member expands in a battery pack according to another embodiment of the present disclosure.
FIG. 11 is a perspective view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

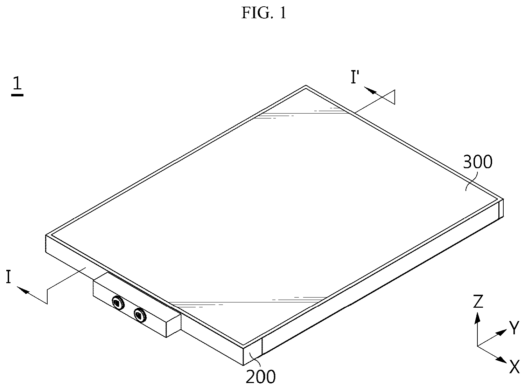

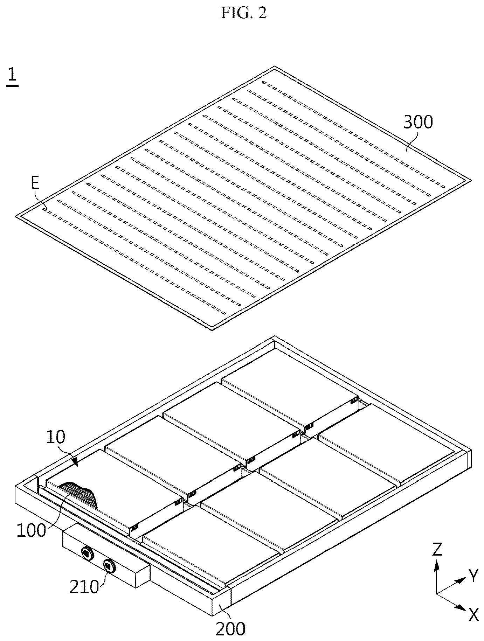

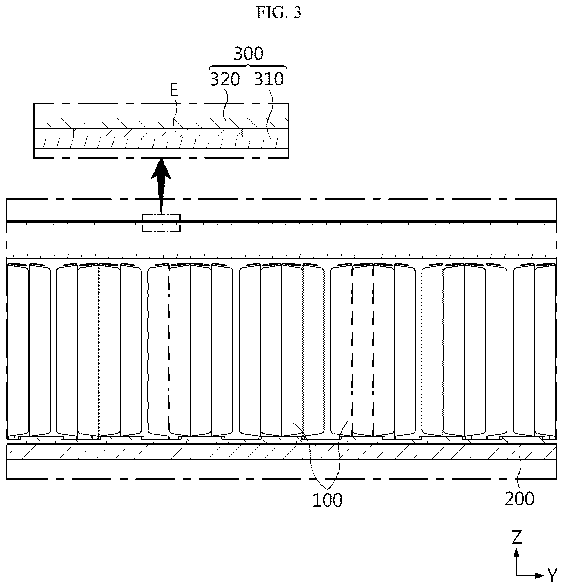

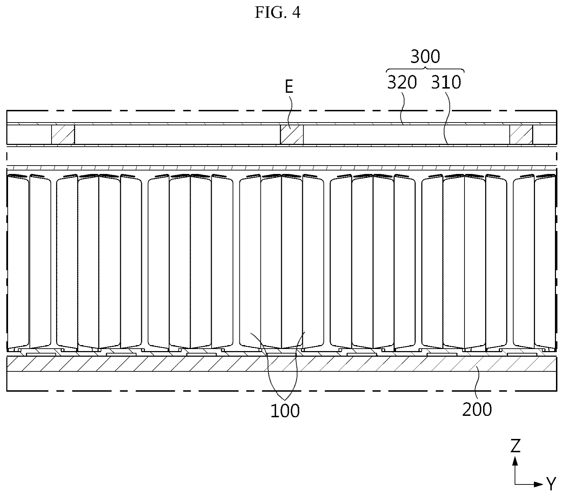

FIG. 1 is a perspective view of a battery pack according to an embodiment of the present disclosure, FIG. 2 is an exploded perspective view of a battery pack according to an embodiment of the present disclosure, and FIG. 3 is a cross-sectional view of a battery pack taken along line I - I' in FIG. 1 according to an embodiment of the present disclosure. FIG. 4 is a cross-sectional view illustrating an expanded expansion member included in a battery pack according to an embodiment of the present disclosure.

Referring to FIGS. 1 to 4, a battery pack 10 according to an embodiment of the present disclosure includes a battery cell 100, a pack housing 200, and a pack cover 300.

Referring to FIG. 2, a plurality of battery cells 100 may be included. In addition, although not shown in the drawing, the plurality of battery cells 100 may include an electrode assembly, a cell case that stores the electrode assembly, and an electrode lead that is connected to the electrode assembly and extends outside the cell case, thereby functioning as an electrode terminal. In this case, the plurality of battery cells 100 may be electrically connected to each other.

The battery cell 100 may be a pouch-type secondary battery. The cell case of the pouch-type secondary battery may be configured as a pouch in which a metal layer made of aluminum is interposed between polymer layers.

The plurality of battery cells 100 may be arranged side by side in the front-back direction (Y-axis direction) while standing in the vertical direction (Z-axis direction), as shown in FIG. 2.

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as illustrated in the drawings, it is obvious that a cylindrical or prismatic secondary battery may also be applied to the battery cell 100.

The pack housing 200 may be configured to store the plurality of battery cells 100. The pack housing 200 may be configured to have a plurality of storage spaces configured to divide and store the plurality of battery cells 100. The storage space is an empty space and may be provided in a shape capable of storing a certain number of divided battery cells 100 therein. The pack housing 200 may be configured to have an opening on at least one side.

The pack housing 200 may be made of a material capable of securing mechanical strength, such as metal such as steel or SUS or plastic, or may include such a material in order to safely protect the battery cells 100 stored therein.

The pack cover 300 may be configured to cover the opening on one side of the pack housing 200. The pack cover 300 may be provided so as to be coupled to the pack housing 200, as in the embodiment illustrated in FIG. 2, or may be provided as an integral part with the pack housing 200. The pack cover 300 may be made of a material capable of securing mechanical strength, such as metal such as steel or SUS or plastic, or may include such a material.

In particular, referring to FIGS. 3 and 4, the pack cover 300 may have an expansion member E provided in the inner space. The expansion member E may be configured to expand if a temperature reaches a reference value or more. The reference value may be set to a temperature at which a thermal event such as thermal runaway occurs in the battery pack 1. Alternatively, the reference value may be set to a temperature at which a fire starts to occur inside or outside the battery pack 1. For example, the reference value may be approximately 600 degrees C.

Accordingly, as shown in the embodiment illustrated in FIG. 3, when the battery pack 1 is in a normal state, the inner space of the pack cover 300 does not expand, so that the height of the battery pack 1 may be minimized. On the other hand, when a specific event occurs in the battery pack 1 so that the temperature becomes equal to or greater than the reference value, as in the embodiment illustrated in FIG. 4, the expansion member E may expand to increase the volume of the inner space of the pack cover 300. In this case, a vacuum layer may be secured inside the pack cover 300, so that the insulation performance of the pack cover 300 may be improved.

According to the above-implemented configuration of the present disclosure, when a thermal event occurs in the battery pack 1, the expansion member E inside the pack cover 300 expands, thereby preventing the pack cover 300 from being heated and acting as an ignition source. Accordingly, the heat source may be removed from the elements for generating flames, thereby suppressing a fire from occurring in the pack cover 300. Therefore, the safety and reliability of the battery pack 1 may be guaranteed.

Meanwhile, referring to FIG. 2, one or more of the plurality of battery cells 100 may be modularized into a plurality of battery modules 10. The battery module 10 may be configured to store at least some of the plurality of battery cells 100 in each inner space. That is, the battery pack 1 according to the present disclosure may include a plurality of battery modules 10, and a plurality of battery cells 100 included in the battery pack 1 may be divided and included in the plurality of battery modules 10. In this case, the plurality of battery cells 100 included in the battery module 10 may be electrically connected to each other.

The plurality of battery modules 10 may be arranged adjacent to each other in the front-back direction and/or the left-right direction along a plurality of rows. For example, as illustrated in FIG. 2, the plurality of battery modules 10 may be arranged in four rows in the front-back direction (X-axis direction) and in two rows in the left-right direction (Y-axis direction).

In addition, although not illustrated in the drawing, the battery module 10 may include a venting hole configured to discharge gas generated in the battery cell 100 to the outside, and/or a bus-bar assembly and/or a module terminal electrically connected to the plurality of battery cells 100 stored therein.

In addition, referring to FIG. 2, the pack housing 200 may include a plurality of plates. For example, the pack housing 200 may be configured in the form of a box with an upper opening, and may be configured to cover the lower surface and side surface of the plurality of battery cells 100. That is, the pack cover 300 may be provided on top of the battery cells 100 and configured to cover the upper opening of the pack housing 200.

According to the above-implemented configuration of the present disclosure, it is possible to prevent the top of the pack cover 300 from igniting and to prevent fire from spreading to the outside of the battery pack 1. As a result, it is possible to effectively prevent fire from occurring in a device including the battery pack 1.

Meanwhile, although the drawings of this specification illustrate an embodiment in which the pack cover 300 is provided on the top of a plurality of battery cells 100, the pack cover 300 may also be provided on the bottom or side of the plurality of battery cells 100.

The pack housing 200 may further include a cross-beam configured to partition a plurality of battery cells 100 or a plurality of battery modules 10.

The pack housing 200 may include a venting device 210. The venting device 210 may be configured to discharge gas generated from battery cells 100 stored therein to the outside of the pack housing 200. The venting device 210 may be configured to open by the pressure of venting gas when the internal pressure of the pack housing 200 increases due to generation of the venting gas therein, thereby discharging the venting gas to the outside of the pack housing 200.

For example, the venting device 210 may be configured to be opened and closed depending on the internal pressure of the pack housing 200. Alternatively, the venting device 210 may be configured in the form of a hole. Meanwhile, the present disclosure is not limited to a specific type or form of venting device 210, and various venting devices 210 known at the time of filing the present disclosure may be employed to configure the battery pack 1 of the present disclosure.

Meanwhile, the number or locations of the venting devices 210 described with reference to the embodiment in FIG. 2 are merely examples, and may be changed to various other numbers or locations.

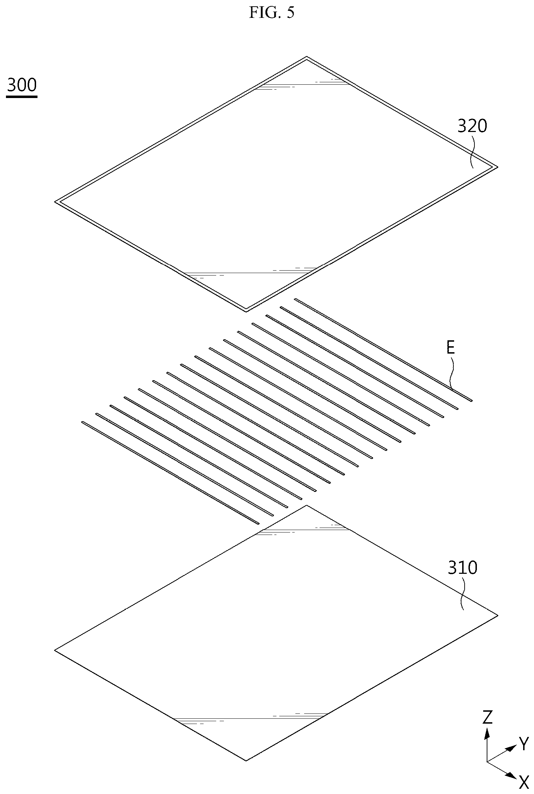

FIG. 5 is an exploded perspective view of a pack cover included in a battery pack according to an embodiment of the present disclosure.

Referring to FIG. 5, the pack cover 300 may be configured in a double structure. Specifically, the pack cover 300 may include a first cover 310 and a second cover 320. The first cover 310 and the second cover 320 may be configured to be disposed in a direction from the outside to the inside. For example, the first cover 310 and the second cover 320 may be configured to be disposed in the vertical direction. The first cover 310 may be provided on the outer side of a plurality of battery cells 100. The second cover 320 may be provided on the outer side of the first cover 310. For example, as shown in FIG. 5, the first cover 310 may be provided on the top of a plurality of battery cells 100, and the second cover 320 may be provided above the first cover 310.

In this case, an expansion member E may be provided between the first cover 310 and the second cover 320. That is, the pack cover 300 may be configured in a sandwich structure in which the expansion member E is provided between two covers.

According to the above-implemented configuration of the present disclosure, since the pack cover 300 is configured as a sandwich structure, when the expansion member E expands, an air layer may be more easily formed in the inner space of the pack cover 300. In addition, according to the above-implemented configuration of the present disclosure, since the pack cover 300 is configured in a double structure, the structural rigidity of the battery pack 1 may be secured.

Meanwhile, referring back to FIG. 4, the pack cover 300 may be configured such that the gap between the first cover 310 and the second cover 320 increases at least partially as the expansion member E expands. The first cover 310 and the second cover 320 may be configured to move away from their original positions in the vertical direction as the expansion member E expands.

According to the above-implemented configuration of the present disclosure, when a thermal event occurs in the battery pack 1, the distance between the first cover 310 and the second cover 320 increases, so that an air layer may be secured between the first cover 310 and the second cover 320. In particular, it is possible to suppress or prevent the second cover 320 located at the outermost side from being heated to cause a fire. Accordingly, according to the above-implemented configuration of the present disclosure, it is possible to prevent a fire from occurring at the outermost side of the battery pack 1 and spreading to a device including the battery pack 1.

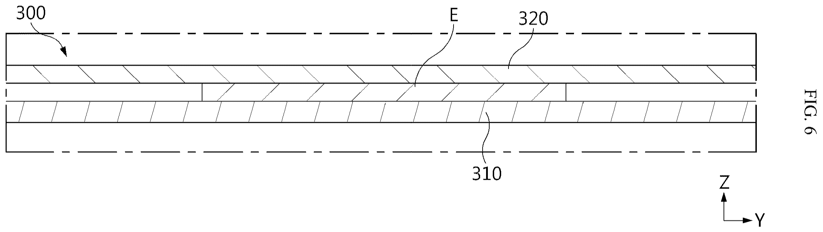

FIG. 6 is a cross-sectional view of a pack cover included in a battery pack according to an embodiment of the present disclosure.

The expansion member E may be configured to be in contact with both the first cover 310 and the second cover 320. For example, as in the embodiment illustrated in FIG. 6, the first cover 310 and the second cover 320 may be configured to be spaced apart from each other, and the expansion member E may be provided in the space therebetween. Specifically, the lower end of the expansion member E may be configured to be seated on the first cover 310, and the upper end of the expansion member E may be configured to be in contact with the second cover 320. Even if the expansion member E expands by heat, the first cover 310 and the second cover 320 may be configured to remain in the contact state with the expansion member E.

According to the above-implemented configuration of the present disclosure, the height of the battery pack 1 may be minimized by minimizing the distance between the first cover 310 and the second cover 320 in a normal state of the battery pack 1. As a result, the energy density of the battery pack 1 may be improved.

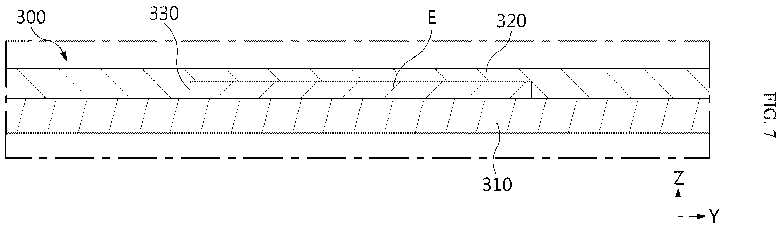

FIG. 7 is a cross-sectional view of a pack cover included in a battery pack according to another embodiment of the present disclosure.

In another embodiment, as in the embodiment illustrated in FIG. 7, the first cover 310 and the second cover 320 may be configured to be in contact with each other. In this case, the pack cover 300 may have a receiving groove 330 formed therein. The receiving groove 330 may be configured such that at least one of the first cover 310 and the second cover 320 is recessed inward. For example, as in the embodiment illustrated in FIG. 7, the expansion member E may be configured to be seated on the first cover 310 and received in the receiving groove 330 formed in the second cover 320. Although FIG. 7 illustrates an embodiment in which the receiving groove 330 is formed in the second cover 320, the receiving groove 330 may be formed in the first cover 310 or in both the first cover 310 and the second cover 320.

According to the above-implemented configuration of the present disclosure, the height of the battery pack 1 may be further reduced by minimizing the thickness of the pack cover 300 in a normal state of the battery pack 1. Therefore, the energy density of the battery pack 1 may be further improved.

In addition, the receiving groove 330 may be configured to receive the expansion member E. The receiving groove 330 may be configured to restrict the expansion member E from moving in the horizontal direction. According to the above-implemented configuration of the present disclosure, when the expansion member E expands by heat, the expansion member E may be prevented from being separated from the first cover 310 and/or the second cover 320. Therefore, the expansion member E may remain in the contact state with the first cover 310 and/or the second cover 320, thereby further reliably separating the first cover 310 and the second cover 320.

Meanwhile, the expansion member E may be configured in a sheet shape. Although the expansion member E is exaggeratedly drawn in the drawing to have a large thickness, it is preferable that the expansion member E be configured as a very thin sheet. In addition, the thickness of the expansion member E may be configured to be much smaller than those of the first cover 310 and the second cover 320. For example, the expansion member E may be configured as a tape, paint, a very thin pad, or the like. In this case, it is more preferable to configure the expansion member E in the form of a band so as to cover a part of the pack cover 300, instead of configuring the expansion member E to cover the entire area of the pack cover 300, for the insulation performance of the pack cover 300.

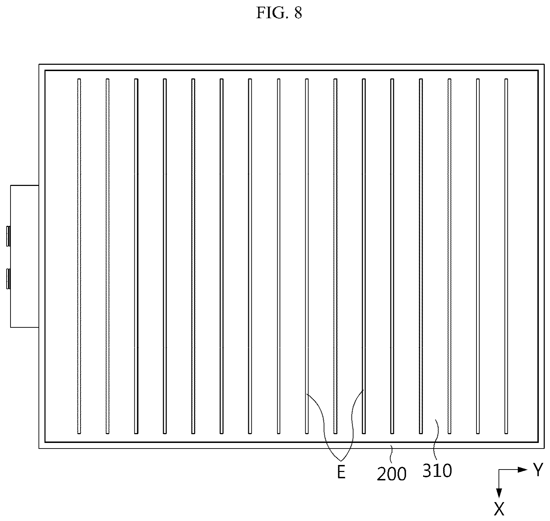

FIG. 8 is a top view of a battery pack according to an embodiment of the present disclosure.

Referring to FIG. 8, a plurality of expansion members E may be provided. The plurality of expansion members E may be disposed to be spaced apart from each other. The plurality of expansion members E may be disposed along the stacking direction of a plurality of battery cells 100. Accordingly, when the expansion member E expands by heat, a vacuum layer may be formed between the expansion members E, thereby preventing the pack cover 300 from being heated.

The plurality of expansion members E may be configured to extend along one direction. The one direction may be a direction orthogonal to the arrangement direction of the plurality of expansion members E on the horizontal plane. The plurality of expansion members E may be disposed parallel to each other.

According to the above-implemented configuration of the present disclosure, when the expansion member E expands by heat, the space between the expansion members E may be configured to have a constant volume. Accordingly, since the air layers are provided at regular intervals inside the pack cover 300, insulation performance may be evenly secured inside the pack cover 300, so that heating of a specific part may be prevented.

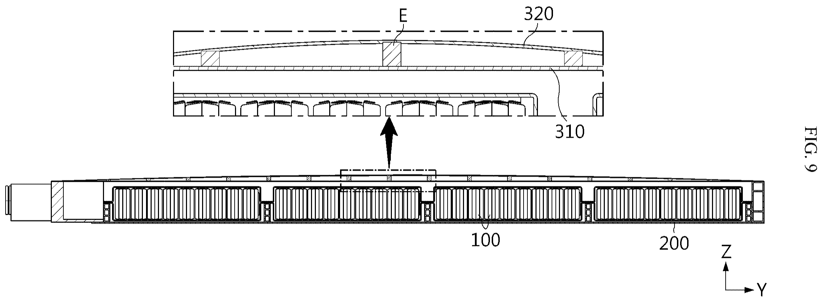

FIG. 9 is a drawing illustrating a shape of a pack cover when the expansion member expands in a battery pack according to an embodiment of the present disclosure.

Meanwhile, in the case where a plurality of expansion members E are provided, the expansion rate may be configured to differ depending on the positions of the plurality of expansion members E. Here, the expansion rate may be a value of a percentage (%) obtained by dividing the volume of the expansion member E after the expansion member E expands at a specific temperature by the volume before the expansion member E expands. The expansion rate of the expansion member E may be configured to differ depending on the positions of the expansion members E by configuring the composition ratio or materials of the expansion member E differently.

For example, the expansion rate of the expansion member E may be configured to differ from the end to the center of the pack cover 300. As a result, if the temperature reaches a reference value, the volume or length of the expanded expansion member E may be different depending on the positions of the expansion members E. Accordingly, when the expansion member E expands, the gap between the first cover 310 and the second cover 320 may differ depending on the position in the pack cover 300.

According to the above-implemented configuration of the present disclosure, the expansion rate of the expansion member E may be configured differently depending on the positions, such as a position where the pack cover 300 is easily heated or a position of a venting unit of the battery cell 100 or battery module 10, so that the position of the air layer formed inside the pack cover 300 may be designed differently. The expansion rate of the expansion member E may be designed experimentally.

As an example, at least some of the plurality of expansion members E may be configured so that the expansion rate increases from the end to the center of the pack cover 300. Since the expansion rate of the expansion member E increases from the end to the center of the pack cover 300, when the expansion member E expands, the center of the first cover 310 and/or the second cover 320 may become convex in the vertical direction. For example, as in the embodiment illustrated in FIG. 9, when the expansion member E expands, the central portion of the second cover 320 may be deformed into a convex shape outward.

According to the above-implemented configuration of the present disclosure, when the expansion member E expands, only the central portion of the second cover 320 is deformed outward, thereby preventing the distal portions of the first cover 310 and the second cover 320 from being separated. Therefore, even if the expansion member E expands inside the pack cover 300, the bonding force of the pack cover 300 may be maintained, thereby preventing various components inside the battery pack 1 from being damaged. Therefore, according to the above-implemented configuration of the present disclosure, the structural stability of the battery pack 1 may be secured.

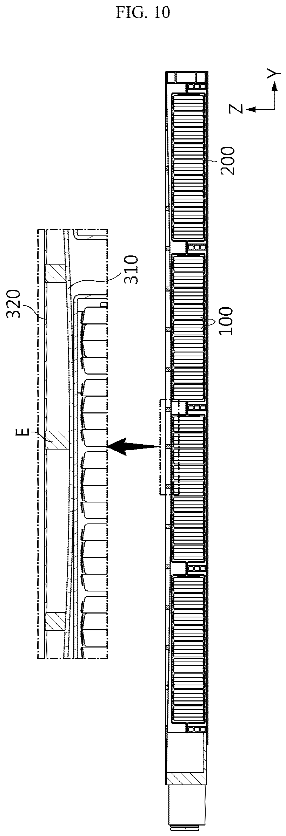

FIG. 10 is a drawing illustrating a shape of a pack cover when the expansion member expands in a battery pack according to another embodiment of the present disclosure.

Unlike the previous embodiment, when the expansion member E expands by heat, as in the embodiment illustrated in FIG. 10, the first cover 310 may be deformed into a convex shape toward the inside of the battery pack 1. In this case, as the expansion member E expands, the space formed between the first cover 310 and the battery cell 100 or the battery module 10 may be effectively filled.

According to the above-implemented configuration of the present disclosure, even if a thermal event occurs in the battery pack 1 so that the expansion member E expands, the overall external shape of the battery pack 1 may be maintained, and a fire may be prevented from occurring at the top of the battery pack 1.

In addition, in the case where the battery pack 1 is installed in a device such as a vehicle, it is not often that much space is secured on the outside of the battery pack 1. According to the above-implemented configuration of the present disclosure, even if the outer space of the battery pack 1 is not sufficient, since there is provided a space in which the expansion member E is able to expand, the efficiency of the battery pack 1 may be obtained while securing the insulation performance of the pack cover 300.

Meanwhile, to this end, the second cover 320 may be configured to include a material having higher rigidity than the first cover 310. The second cover 320 may be configured to include a material that does not deform even when the expansion member E expands.

In particular, the second cover 320 may be provided on the outermost side of the battery pack 1 and exposed to the outside. As in the above-implemented configuration of the present disclosure, since the second cover 320 is made of a material having higher rigidity, the structural stability of the battery pack 1 may be further secured. Therefore, even if thermal events or various shocks such as vibrations are applied, the internal components of the battery pack 1 may be protected.

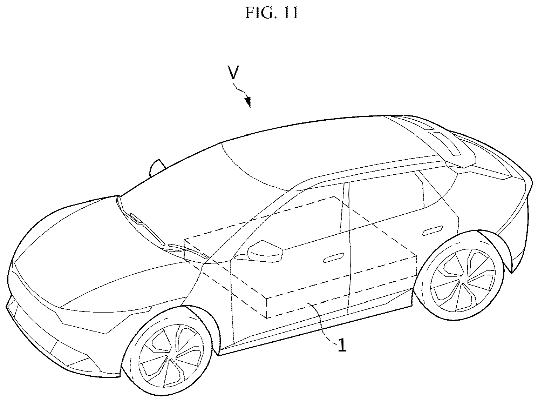

FIG. 11 is a perspective view schematically illustrating a vehicle including a battery pack according to an embodiment of the present disclosure.

Referring to FIG. 11, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V may be operated by power supplied from the battery pack 1 according to an embodiment of the present disclosure.

The vehicle V may be provided with a battery pack 1 including a pack cover 300 having an expansion member E configured to expand when a temperature of the inner space reaches a reference value, thereby preventing or delaying an event due to thermal runaway, such as a fire or explosion, in the battery pack 1 or the vehicle V.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery pack comprising:
a plurality of battery cells;
a pack housing having an opening on at least one side and configured to store the plurality of battery cells; and
a pack cover configured to cover the opening of the pack housing and having an expansion member configured to expand when a temperature reaches a reference value or more in an inner space thereof.

2. The battery pack according to claim 1,
wherein the pack housing has an upper opening, and
the pack cover is configured to cover the opening of the pack housing.

3. The battery pack according to claim 1,
wherein the pack cover comprises
a first cover provided on an outer side of the plurality of battery cells, and
a second cover provided on an outer side of the first cover, and
wherein the expansion member is provided between the first cover and the second cover.

4. The battery pack according to claim 3,
wherein the pack cover is configured such that a gap between the first cover and the second cover increases as the expansion member expands.

5. The battery pack according to claim 3,
wherein the expansion member is configured to be in contact with both the first cover and the second cover.

6. The battery pack according to claim 1,
wherein the expansion member is configured in a sheet shape.

7. The battery pack according to claim 1,
wherein a plurality of expansion members are provided so as to be spaced apart from each other.

8. The battery pack according to claim 7,
wherein the expansion members are configured to extend in one direction.

9. The battery pack according to claim 7,
wherein the expansion members are configured to have an expansion rate that differs depending on their positions.

10. The battery pack according to claim 9,
wherein at least some of the plurality of expansion members are configured such that the expansion rate increases from an end of the pack cover to a central portion.

11. A vehicle comprising a battery pack according to any one of claims 1 to 10.
